# EUROPEAN PATENT APPLICATION

(11) **EP 3 854 832 A1**
(43) Date of publication of application: **28.07.2021**
(21) Application number: 19862569.1
(22) Date of filing: 30.08.2019
(51) Int. Cl.: C08G 59/18, C08K 3/38, C08L 63/00

(54) **RESIN COMPOSITION**

(30) Priority: 20.09.2018 JP 2018176366
(71) Applicant: Nitto Shinko Corporation, Sakai-shi, Fukui 910-0381 (JP)
(72) Inventor: TABUCHI, Akihiro, Sakai-shi, Fukui 910-0381 (JP); INAGAKI, Tatsuya, Sakai-shi, Fukui 910-0381 (JP)
(74) Representative: Stolmár & Partner Patentanwälte PartG mbB
(86) International application number: PCT/JP2019/034108
(87) International publication number: WO 2020/059463

(57) **Abstract**

The present invention provides a resin composition including a specific epoxy resin, a specific curing agent, and a boron nitride filler.

## Description

### CROSS-REFERENCE TO RELATED APPLICATION

This application claims priority to Japanese Patent Application No. 2018-176366, the disclosure of which is incorporated herein by reference in its entirety.

### FIELD

The present invention relates to a resin composition.

### BACKGROUND

Conventionally, a resin composition including an epoxy resin and a curing agent of the epoxy resin has been used in the field of electronics.

Patent Literature 1 below discloses that the resin composition is formed into a sheet shape and then cured to be used as an insulation sheet. Patent Literature 1 below also discloses that an inorganic filler is included in the resin composition to increase the thermal conductivity of the insulation sheet.

### CITATION LIST

### Patent Literature

Patent Literature 1: JP 2010-094887 A

### SUMMARY

### Technical Problem

However, no sufficient consideration has been previously given on a method of increasing the thermal conductivity of a cured product of the resin composition other than including an inorganic filler.

It is therefore an object of the present invention to provide a resin composition excellent in thermal conductivity when formed into a cured product.

### Solution to Problem

That is, the resin composition according to the present invention is a resin composition including an epoxy resin; a curing agent for the epoxy resin; and an inorganic filler, wherein an epoxy resin of a formula (1) below is included as the epoxy resin, a resin of a formula (2) below is included as the curing agent, and a boron nitride filler is included as the inorganic filler. 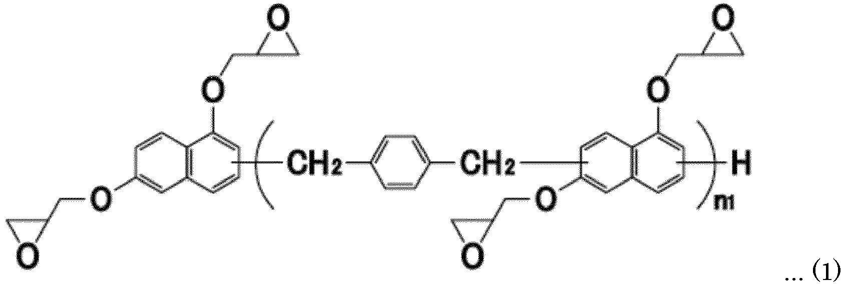 (where n1 is a positive integer.) 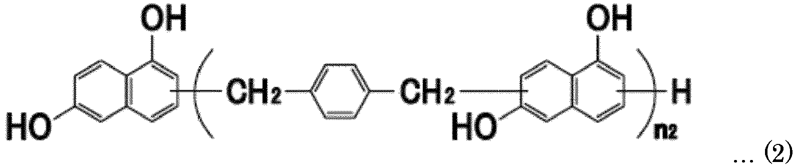 (where n2 is a positive integer.)

One aspect of the resin composition according to the present invention includes the boron nitride filler so that a content ratio of the boron nitride filler in a cured product is 50 volume % or more when a solid content of the cured product after curing is 100 volume %.

### BRIEF DESCRIPTION OF DRAWINGS

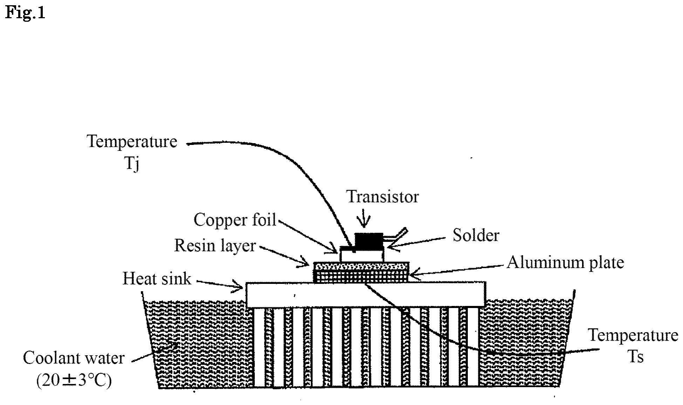

Fig. 1 is a schematic view showing the arrangement for measurement of thermal conductivity.

### DESCRIPTION OF EMBODIMENTS

Hereinafter, an embodiment of the present invention will be described with reference to the attached drawings.

A resin composition according to this embodiment includes a component that finally forms a cured product. That is, the resin composition according to this embodiment includes a polymerizable component that becomes a resin component of the cured product by polymerization. The resin composition according to this embodiment includes an inorganic filler in terms of being excellent in thermal conductivity. Further, the resin composition according to this embodiment may include an additive commonly used as a plastic compounding chemical without impairing the effect of the present invention.

In the resin composition according to this embodiment, the content ratio of the polymerizable component in the component that becomes a cured product is preferably 10 to 45 mass %, more preferably 20 to 35 mass %.

The cured product obtained by curing the resin composition according to this embodiment includes preferably 50 volume % or more, more preferably 53 to 70 volume %, further preferably 55 to 65 volume %, of the inorganic filler when the solid content is 100 volume %. In addition, the resin composition according to this embodiment includes preferably 150 to 400 mass parts, more preferably 200 to 300 mass parts, of the inorganic filler based on 100 mass parts of the polymerizable component, in terms of allowing the content ratio of the inorganic filler in the cured product to easily fall within the above range.

Further, the resin composition according to this embodiment includes preferably 0.05 to 4.0 mass parts, more preferably 0.5 to 2.0 mass parts, of the additive based on 100 mass parts of the polymerizable component.

The resin composition according to this embodiment includes, as the polymerizable component, an epoxy resin and a curing agent for the epoxy resin.

The polymerizable component includes preferably 10 to 100 mass %, more preferably 20 to 50 mass %, of the total of the epoxy resin and the curing agent for the epoxy resin.

The ratio of the equivalent weight of the curing agent for the epoxy resin to the equivalent weight of the epoxy resin is preferably 1/2 to 2/1, more preferably 2/3 to 3/2.

It is important that the resin composition according to this embodiment includes, as the epoxy resin, an epoxy resin of the formula (1) below, and includes, as the curing agent, a resin of the formula (2) below: 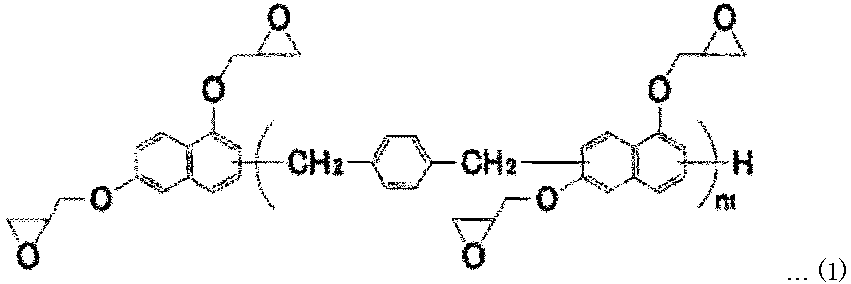 (where n1 is a positive integer.) 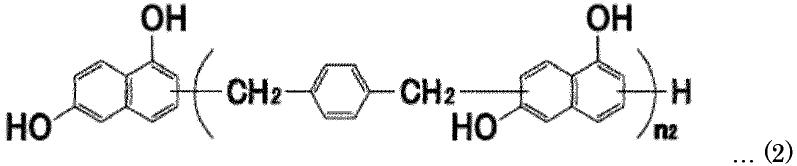 (where n2 is a positive integer.)

The epoxy resin includes preferably 50 to 100 mass %, more preferably 70 to 100 mass %, still more preferably 80 to 100 mass %, of the epoxy resin of the formula (1) above. However, it is preferable that the epoxy resin include a higher proportion of the epoxy resin of the formula (1) above, in order to reliably exert the effect of the invention.

The weight-average molecular weight of the epoxy resin of the formula (1) above is preferably 280 to 400, more preferably 320 to 360. In this embodiment, the weight-average molecular weight can be determined by gel permeation chromatography (GPC).

The curing agent for the epoxy resin includes preferably 50 to 100 mass %, more preferably 70 to 100 mass %, still more preferably 80 to 100 mass %, of the resin of the formula (2) above. However, it is preferable that the curing agent of the epoxy resin include a higher proportion of the resin of the formula (2) above, in order to reliably exert the effect of the invention.

The weight-average molecular weight of the resin of the formula (2) above is preferably 160 to 280, more preferably 200 to 240.

Examples of the epoxy resin other than the epoxy resin of the formula (1) above include a bisphenol A epoxy resin and a novolac epoxy resin.

Examples of the curing agent for the epoxy resin include an amine-based curing agent, a phenolic curing agent, and an acid anhydride. Examples of the amine-based curing agent include diaminodiphenylsulfone, dicyandiamide, diaminodiphenylmethane, and triethylenetetramine. Examples of the phenolic curing agent include a phenol novolac resin, an aralkyl phenol resin, a dicyclopentadiene modified phenol resin, a naphthalene phenol resin, and a bisphenol phenol resin. Examples of the acid anhydride include phthalic anhydride, trimellitic anhydride, and maleic anhydride.

It is important that the resin composition according to this embodiment includes, as the inorganic filler, a boron nitride filler. It is preferable that the resin composition according to this embodiment include no inorganic filler other than the boron nitride filler, or include a smaller amount of an inorganic filler other than the boron nitride filler, in terms of easily increasing the thermal conductivity of the cured product. That is, the inorganic filler includes preferably 70 to 100 volume %, more preferably 80 to 100 volume %, still more preferably 90 to 100 volume %, particularly preferably 95 to 100 volume %, of the boron nitride filler. Examples of the inorganic filler other than the boron nitride filler include an aluminum nitride filler, a silica nitride filler, a gallium nitride filler, an alumina filler, a silicon carbide filler, a silicon dioxide filler, a magnesium oxide filler, and a diamond filler.

The cured product obtained by curing the resin composition according to this embodiment includes preferably 50 volume % or more, more preferably 53 to 70 volume %, further preferably 55 to 65 volume %, of the boron nitride filler when the solid content is 100 volume %. In addition, the resin composition according to this embodiment includes preferably 120 to 450 mass parts, more preferably 150 to 400 mass parts, still more preferably 200 to 300 mass parts, of the boron nitride filler based on 100 mass parts of the total of the epoxy resin of the formula (1) and the resin of the formula (2).

It is preferable that the resin composition according to this embodiment include a silane coupling agent, in terms of allowing the inorganic filler and the resin to be easily blended with each other.

Examples of the additive include a curing accelerator that accelerates a curing reaction between the epoxy resin and the curing agent of the epoxy resin, and include a dispersant, a tackifier, an antiaging agent, an antioxidant, a processing aid, a stabilizer, a defoamer, a flame retardant, a thickener, and a pigment.

Examples of the curing accelerator include tetraphenylphosphonium tetraphenylborate, imidazoles, triphenylphosphate (TPP), and an amine-based curing accelerator. Examples of the amine-based curing accelerator include boron trifluoride monoethyl amine.

The resin composition according to this embodiment includes preferably 0.5 to 1.5 mass parts, more preferably 0.5 to 5.0 mass parts, of the curing accelerator based on 100 mass parts of the total of the epoxy resin and the curing agent of the epoxy resin.

The polymerizable component (e.g., epoxy resin) is cured by polymerization to thereby become a cured resin (resin component of the cured product).

The resin composition according to this embodiment can be cured into a sheet shape to be used for a metal base circuit board. The metal base circuit board can be formed, for example, by bonding a circuit layer to the sheet-shaped cured product of the resin composition. The thus configured metal base circuit board having the sheet-shaped cured product of the resin composition is also excellent in thermal conductivity.

Further, the resin composition according to this embodiment can be cured into a sheet shape to be used for a power module. The power module can be formed, for example, by mounting heating elements such as semiconductor chips or power ICs on the circuit layer of the metal base circuit board, once sealing these elements with silicone gel, and further performing resin molding on the silicone gel. The thus configured power module having the sheet-shaped cured product of the resin composition is also excellent in thermal conductivity.

The resin composition according to this embodiment is configured as described above, and thus has the following advantages.

As a result of diligent studies, the present inventors have found that a resin composition including a specific inorganic filler includes a specific epoxy resin and a specific curing agent so that the cured product of the resin composition becomes excellent in thermal conductivity, thereby allowing this embodiment to be conceived.

That is, the resin composition according to this embodiment is a resin composition including an epoxy resin, a curing agent for the epoxy resin, and an inorganic filler. Further, the resin composition according to this embodiment includes, as the epoxy resin, an epoxy resin of the formula (1) above, includes, as the curing agent, a resin of the formula (2) above, and includes, as the inorganic filler, a boron nitride filler. According to this embodiment, the resin composition excellent in thermal conductivity when formed into the cured product can be provided.

The resin composition according to the present invention is not limited to the aforementioned embodiment. Further, the resin composition according to the present invention is not limited by the aforementioned operational effects, either. Various modifications can be made to the resin composition according to the present invention without departing from the gist of the present invention.

### EXAMPLES

Next, the present invention will be described more specifically by way of Examples and Comparative Examples.

### (Example 1)

A resin composition was obtained by mixing together the following epoxy resin, the following curing agent, the following curing accelerator, and the following inorganic filler:
Epoxy Resin: Epoxy resin of formula (1) below (weight-average molecular weight: 340)
Curing agent: Resin of formula (2) below (weight-average molecular weight: 220)
Curing accelerator: Tetraphenylphosphonium tetraphenylborate (TPP-K (registered trademark), manufactured by HOKKO CHEMICAL INDUSTRY CO., LTD.)
Inorganic Filler: Boron nitride filler

The epoxy resin and the curing agent were included in the resin composition at an equivalent ratio of 1:1. Further, 0.01 mass part of the curing accelerator was included in the resin composition based on 100 mass parts of the total of the epoxy resin and the curing agent. The inorganic filler was included in the resin composition so that the cured product obtained by curing the resin composition included 59 volume % of the inorganic filler when the solid content is 100 volume %. The resin composition included 16.5 mass % of the epoxy resin and 10.7 mass % of the curing agent in the component serving as the cured product. That is, the resin composition included 27.2 mass % of the polymerizable components (the epoxy resin and the curing agent) in the component serving as a cured product. The resin composition included 266.2 mass parts of the inorganic filler (boron nitride filler) based on 100 mass parts of the polymerizable components (the epoxy resin and the curing agent). 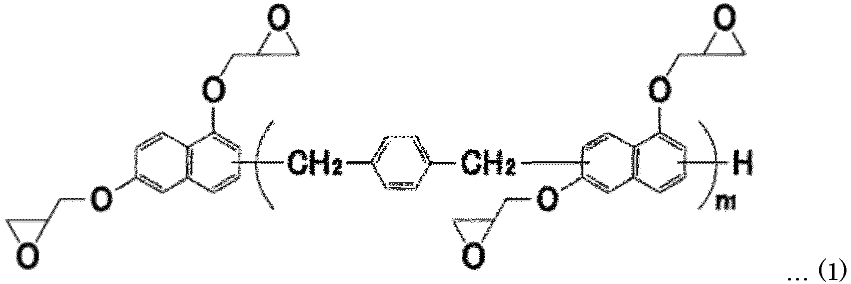 (where n1 is a positive integer.) 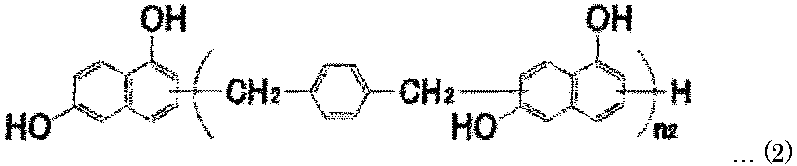 (where n2 is a positive integer.)

### (Comparative Example 1)

A resin composition was obtained in the same manner as in Example 1, except that an epoxy resin of the formula (3) below was used as the epoxy resin and a resin of the formula (4) below was used as the curing agent. The epoxy resin and the curing agent were included in the resin composition at an equivalent ratio of 1:1. Further, 0.01 mass part of the curing accelerator was included in the resin composition based on 100 mass parts of the total of the epoxy resin and the curing agent. The inorganic filler was included in the resin composition so that the content ratio of the inorganic filler was 59 volume % when the solid content of the cured product of the resin composition was 100 volume % after curing of the resin composition. 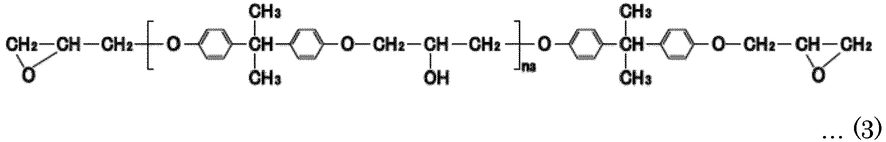 (where n3 is a positive integer.) 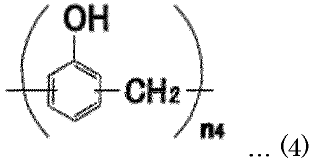 (where n4 is a positive integer.)

### (Comparative Example 2)

A resin composition was obtained in the same manner as in Example 1, except that the epoxy resin of the formula (3) above was used as the epoxy resin. The epoxy resin and the curing agent were included in the resin composition at an equivalent ratio of 1:1. Further, 0.01 mass part of the curing accelerator was included in the resin composition based on 100 mass parts of the total of the epoxy resin and the curing agent. The inorganic filler was included in the resin composition so that the content ratio of the inorganic filler was 59 volume % when the solid content of the cured product of the resin composition was 100 volume % after curing of the resin composition.

### (Comparative Example 3)

A resin composition was obtained in the same manner as in Example 1, except that the resin of the formula (4) above was used as the curing agent. The epoxy resin and the curing agent were included in the resin composition at an equivalent ratio of 1:1. Further, 0.01 mass part of the curing accelerator was included in the resin composition based on 100 mass parts of the total of the epoxy resin and the curing agent. The inorganic filler was included in the resin composition so that the content ratio of the inorganic filler was 59 volume % when the solid content of the cured product of the resin composition was 100 volume % after curing of the resin composition.

### (Example 2)

A resin composition was obtained in the same manner as in Example 1, except that a mixture of the boron nitride filler and alumina (a mixture having a volume ratio of the boron nitride filler and alumina (BN : alumina) of 7:3) was used as the inorganic filler. The inorganic filler was included in the resin composition so that the cured product obtained by curing the resin composition includes 59 volume % of the inorganic filler when the solid content is 100 volume %. The resin composition included 148 mass parts of the boron nitride filler and 193 mass parts of alumina based on 100 mass parts of the polymerizable components (the epoxy resin and the curing agent). That is, the resin composition included 341 mass parts of the inorganic filler (the boron nitride filler and alumina) based on 100 mass parts of the polymerizable components (the epoxy resin and the curing agent).

### (Comparative Example 4)

A resin composition was obtained in the same manner as in Example 2, except that the epoxy resin of the formula (3) above was used as an epoxy resin and the resin of the formula (4) above was used as the curing agent. The epoxy resin and the curing agent were included in the resin composition at an equivalent ratio of 1:1. Further, 0.01 mass part of the curing accelerator was included in the resin composition based on 100 mass parts of the total of the epoxy resin and the curing agent. The inorganic filler was included in the resin composition so that the content ratio of the inorganic filler was 59 volume % when the solid content of the cured product of the resin composition was 100 volume % after curing of the resin composition.

### (Comparative Example 5)

A resin composition was obtained in the same manner as in Example 2, except that the epoxy resin of the formula (3) above was used as the epoxy resin. The epoxy resin and the curing agent were included in the resin composition at an equivalent ratio of 1:1. Further, 0.01 mass part of the curing accelerator was included in the resin composition at a ratio of 0.01 mass part, based on 100 mass parts of the total of the epoxy resin and the curing agent. The inorganic filler was included in the resin composition so that the content ratio of the inorganic filler was 59 volume % when the solid content of the cured product of the resin composition was 100 volume % after curing of the resin composition.

### (Comparative Example 6)

A resin composition was obtained in the same manner as in Example 2, except that the resin of the formula (4) above was used as the curing agent. The epoxy resin and the curing agent were included in the resin composition at an equivalent ratio of 1:1. Further, 0.01 mass part of the curing accelerator was included in the resin composition based on 100 mass parts of the total of the epoxy resin and the curing agent. The inorganic filler was included in the resin composition so that the content ratio of the inorganic filler was 59 volume % when the solid content of the cured product of the resin composition was 100 volume % after curing of the resin composition.

### <Peel test>

The resin composition of each of the Examples and the Comparative Examples was applied to one side of each of electrolytic copper foils (each having a thickness of 35 µm) to prepare two sheets each having a resin layer (thickness of 145 µm). Next, the two sheets were hot-pressed (3.0 MPa, 120 °C, 20 mins) to bond the resin layers to each other, and one copper foil was peeled off from the back side of one of the sheets. Then, an aluminum plate was placed on the surface of the sheet from which the copper foil had been peeled off, and was subjected to hot-pressing (2.0 MPa, 120 °C, 20 mins) to transfer the sheet to the aluminum plate, and then the copper foil was further peeled off from the other sheet to obtain a semi-cured sheet. Next, an adherend (copper foil, 1 oz) was laminated on this semi-cured sheet to integrate the resin layer and the adherend together by hot-pressing (2.0 MPa, 180 °C, 120 mins). After the resin layer was sufficiently cured, the laminated body was cut into a 20 mm × 10mm piece and the adherend of the cut piece was processed (etched) to a width of 10 mm to make a test piece for the peel test. The test piece was subjected to a 90° peel test at a peeling speed of 50 mm/min, and the degree of adhesion between the adherend and the resin layer was evaluated by adhesive force. The results are shown in Tables 1 and 2 below.

### <Thermal conductivity>

The thermal conductivity was measured by the transistor method. Details of the measurement method will be described below with reference to Fig. 1. The resin composition of each of the Examples and the Comparative Examples was applied to one side of each of electrolytic copper foils (each having a thickness of 105 µm) to prepare two sheets each having a resin layer (thickness of 100 µm). Next, the two sheets were hot-pressed (3.0 MPa, 120 °C, 20 mins) to bond the resin layers to each other, and one copper foil was peeled off from the back side of one of the sheets. Then, an aluminum plate was placed on the surface of the sheet from which the copper foil had been peeled off, and was subjected to hot-pressing (2.0 MPa, 180 °C, 120 mins) to transfer the sheet to the aluminum plate, to thereby obtain a thermally conductive sheet having the resin layer that has been sufficiently heat-cured. The copper foil in this thermally conductive sheet was etched at a size of 10 × 15 mm, and a transistor (TO-220 type "C2233") was fixed to the etched portion by soldering. Further, an appropriate amount of "1 W/m • K heat radiation grease" was applied to the aluminum plate, and a heat sink was attached to the aluminum plate. Then, the voltage and current applied to the transistor were adjusted so that the transistor consumed 10 to 40 W of power, and the temperature was measured with thermocouples respectively mounted directly below the heat dissipation portion of the transistor and mounted on the aluminum plate. The temperature (Ts) of the aluminum plate was subtracted from the temperature (Tj) directly below the heat dissipation portion of the transistor, which was further divided by power. The reciprocal of the obtained value was used to calculate the thermal conductivity. The results are shown in Tables 1 and 2 below.

**Table 1**

| | Adhesive force (N/cm) | Thermal conductivity (W/(m • K)) |
|---|---|---|
| Example 1 | 2.0 | 12.0 |
| C. Example 1 | 2.0 | 11.0 |
| C. Example 2 | 2.0 | 11.0 |
| C. Example 3 | 2.0 | 11.0 |

**Table 2**

| | Adhesive force (N/cm) | Thermal conductivity (W/(m • K)) |
|---|---|---|
| Example 2 | 3.5 | 9.0 |
| C. Example 4 | 3.5 | 7.0 |
| C. Example 5 | 3.5 | 7.0 |
| C. Example 6 | 3.5 | 7.0 |

As shown in Table 1, in the resin composition of Example 1, which is within the scope of the present invention, the cured product had higher thermal conductivity than that of the resin compositions of Comparative Example 1 to 3 each having the same mixing ratio of the inorganic filler and each having substantially the same adhesive force as that of Example 1. Further, as shown in Table 2, in the resin composition of Example 2, which is within the scope of the present invention, the cured product had higher thermal conductivity than that of the resin compositions of Comparative Example 4 to 6 each having the same mixing ratio of the inorganic filler and each having substantially the same adhesive force as that of Example 2.

## Claims

1. A resin composition comprising:
an epoxy resin;
a curing agent for the epoxy resin; and
an inorganic filler, wherein
an epoxy resin of a formula (1) below is included as the epoxy resin,
a resin of a formula (2) below is included as the curing agent, and
a boron nitride filler is included as the inorganic filler. 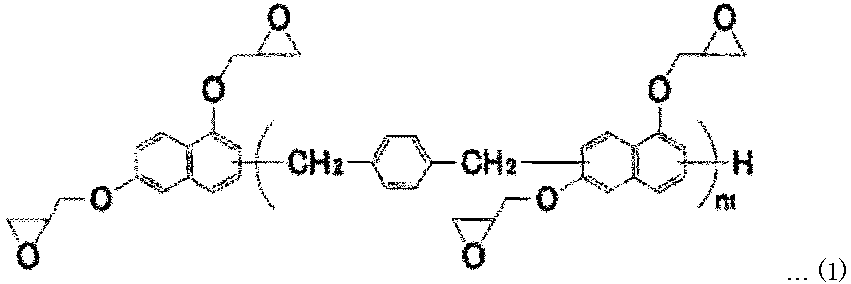 (where n1 is a positive integer.) 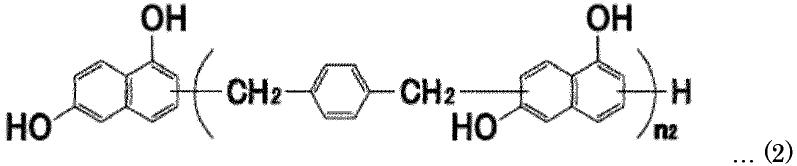 (where n2 is a positive integer.)

2. The resin composition according to claim 1, comprising the boron nitride filler so that a content ratio of the boron nitride filler in a cured product is 50 volume % or more when a solid content of the cured product after curing is 100 volume %.
